# EUROPEAN PATENT SPECIFICATION

(11) **EP 0 692 187 B1**
(45) Date of publication and mention of the grant of the patent: **19.12.2001**
(21) Application number: 95202498.2
(22) Date of filing: 05.06.1992
(51) Int. Cl.: A01J 7/00

(54) **An implement for milking animals**
Vorrichtung zum Melken von Tieren
Dispositif de traite d'animaux

(30) Priority: 10.06.1991 NL 9100992
(43) Date of publication of application: 17.01.1996
(62) Divisional of application: 92201630.8
(73) Proprietor: C. van der Lely N.V., 3155 PD Maasland (NL)
(72) Inventor: van den Berg, Karel, NL-2971 BR Bleskensgraaf (NL); Fransen, René, NL-3135 ZD Vlaardingen (NL); van der Lely, Edwin, NL-3155 PD Maasland (NL)
(74) Representative: Corten, Maurice Jean F.M.

(56) References cited:
- EP-A- 0 300 582
- EP-A- 0 309 036
- EP-A- 0 320 496
- EP-A- 0 360 354
- WO-A-90/07268

## Description

The present invention relates to an implement for milking animals, such as cows, comprising a milking parlour and a milking robot for the automatic milking of animals.

When an animal enters the milking parlour, she has not to be impeded by the milking robot; therefore, the milking robot may be arranged in a rest position. It is favourable that, when an animal is located in the milking parlour, she has the possibility to move to some extent; in that case, the milking robot may follow the movements of the animal being brought from the rest position to a start position, from which arms of the milking robot can be moved under the animal present in the milking parlour. A suchlike implement is known from EP-A1-0309036 or EP-A-0300582. In the implement in said documents after the animal has entered the milking parlour, a supporting element is moved forwardly against the rear side of the animal by means of a pneumatic cylinder. As the milking robot is mechanically coupled to the supporting element, the milking robot is moved too from the rest position to the start position. From this start position, a robot arm with teat cups is moved between the hind legs to under the udder of the animal. The mechanical coupling between the supporting element and the milking robot forms a serious limitation, as the build of the animal has not been taken into consideration.

Therefore, according to the invention, the implement is provided with a distance measuring sensor for measuring the distance to the rear side of the animal, by means of which sensor the milking robot can be directed from a rest position into the longitudinal direction of the milking parlour to a start position, from which arms of the milking robot are moved to under the animal present in the milking parlour, and the movements of the animal in the longitudinal direction of the milking parlour can be followed.

It can be noticed that the non-prepublished patent application EP-A1-0452381, filed with priority of 04.01.1989, shows an implement wherein the position of retaining means at and near the rear side of an animal is measured. In this implement, a robot arm carrying teat cups is controlled by combining signals applied to connect the teat cups to the teats in the case the animal remains motionless with the signals from the retaining means. The milking robot itself, however, is arranged fixedly sidewards of the milking parlour.

In a more concrete embodiment, there is provided a supporting element which is movable against the rear side of the animal and can co-operate with the distance measuring sensor, i.e. in such a manner that, when the animal moves in the longitudinal direction of the milking parlour, the supporting element is moved along and consequently, while preserving a predetermined supporting element-to-sensor distance in the longitudinal direction, the milking robot. Particularly, the supporting element may include a plate which is disposed such that it laterally extends beyond the longitudinal side of the milking parlour, and from the actual distance between the plate and the distance measuring sensor there may be derived a control signal for the motor to move the milking robot into the longitudinal direction of the milking parlour, with the aid of which control signal the distance between the plate and the sensor can be readjusted to a preset value.

For a better understanding of the invention and to show how the same may be carried into effect, reference will now be made, by way of example, to the accompanying drawings, in which:
Figure 1 is a plan view of the implement in accordance with the invention, the arms of the milking robot being moved to under an animal present in the milking parlour;
Figure 2 is a side view of the implement shown in Figure 1, the milking robot being in the rest position;

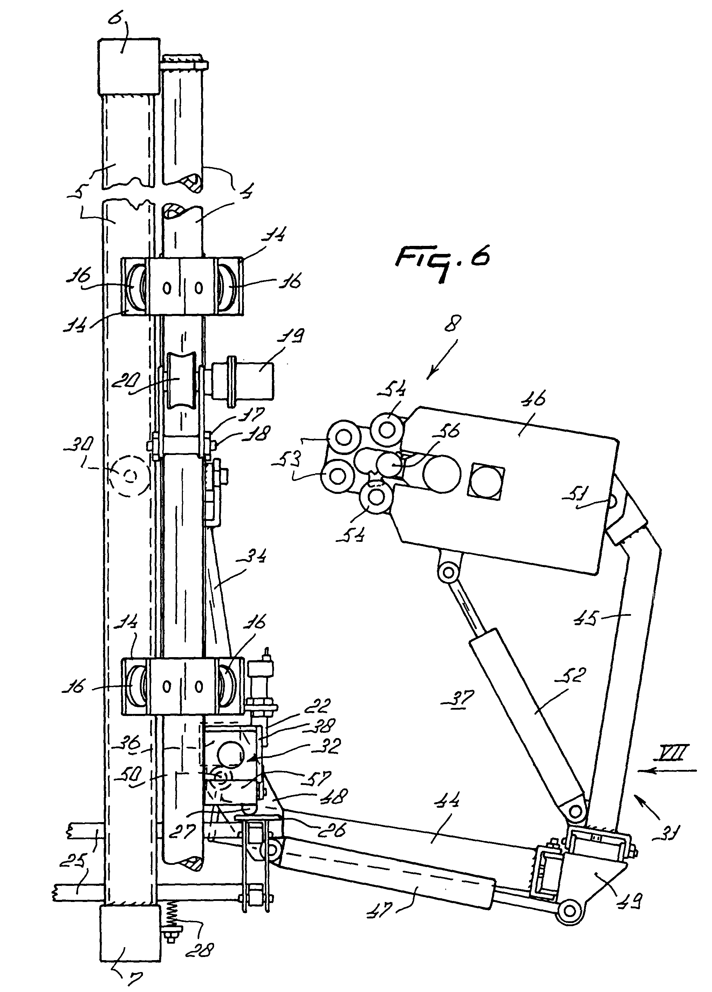

Figures 3 to 8 show in further detail several component parts of the implement illustrated in Figures 1 and 2.

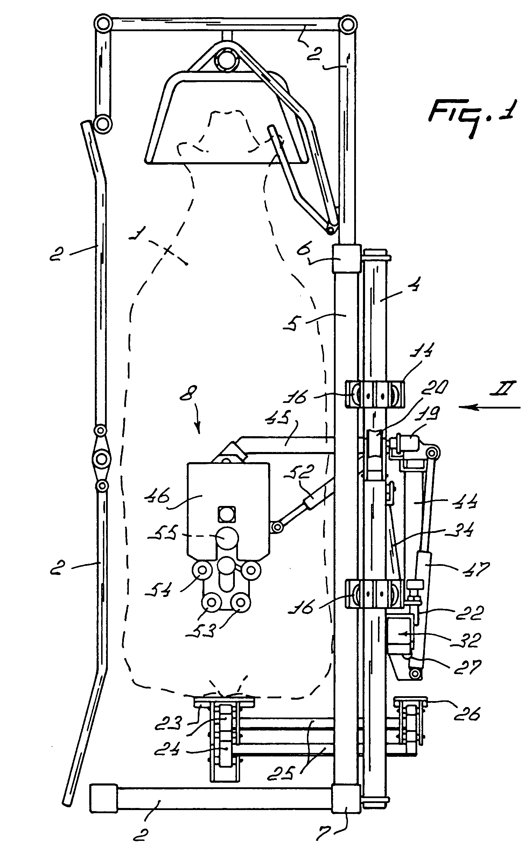

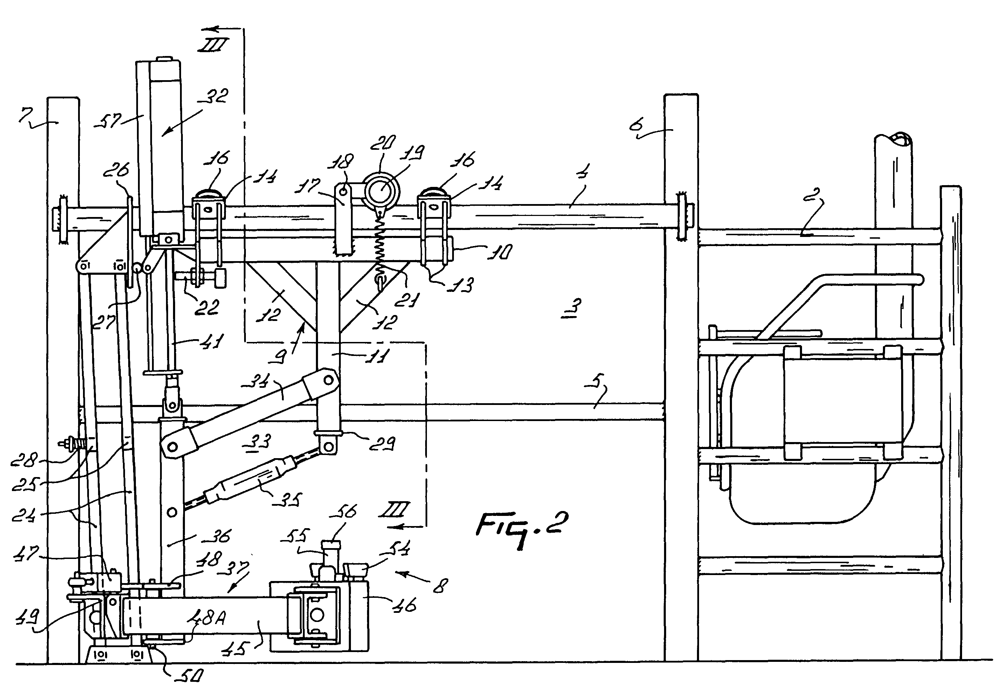

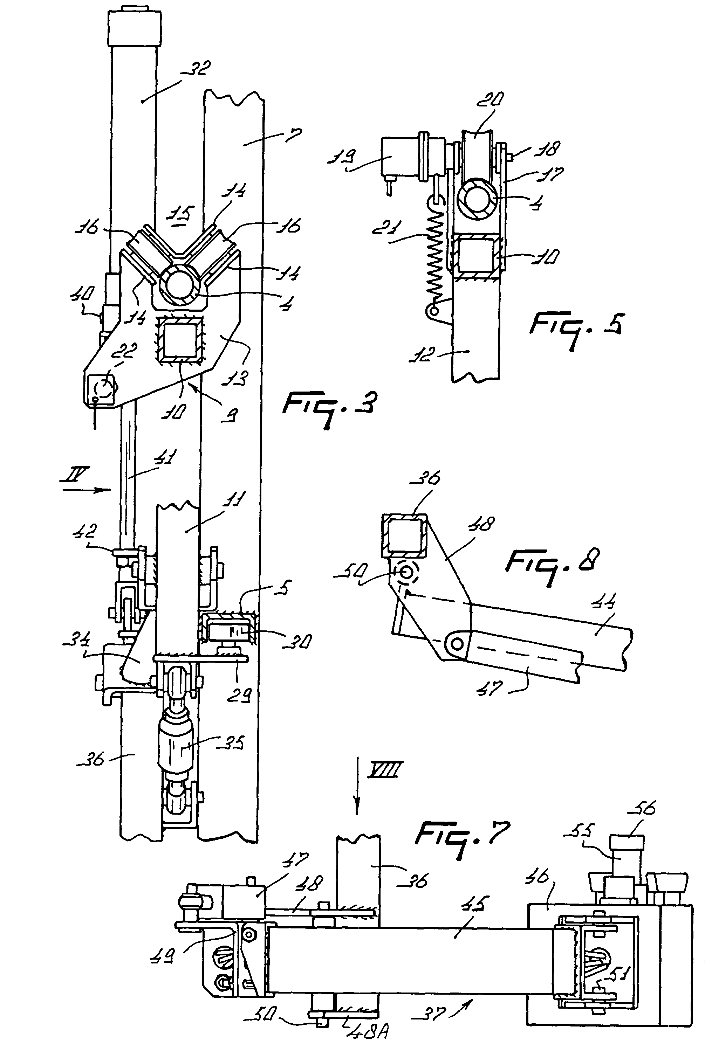

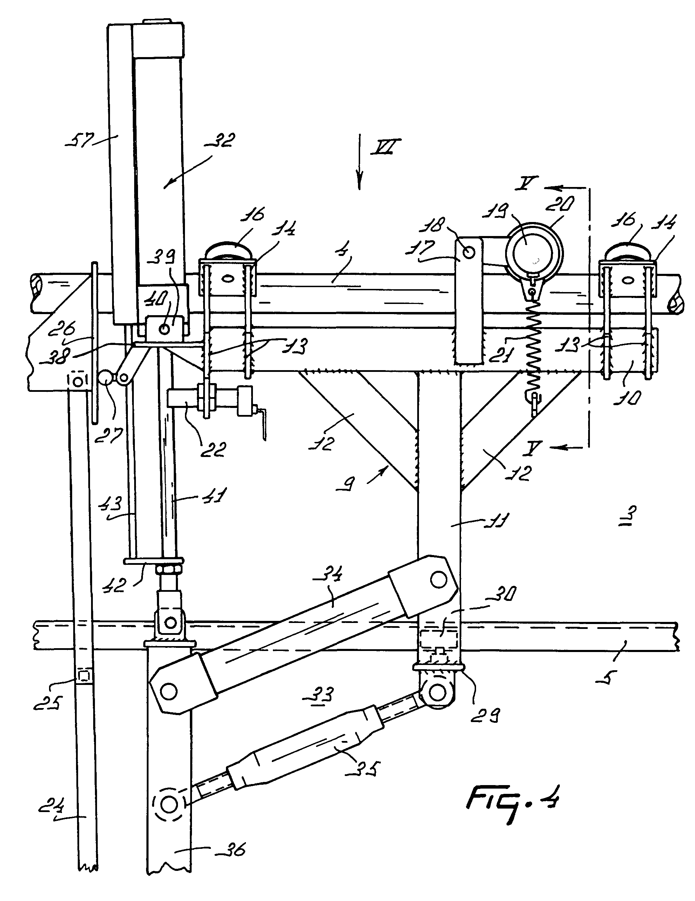

In the plan view of the implement according to Figure 1, a cow 1 is shown standing in the milking parlour, the milking parlour being surrounded by a railing 2 which allows the animal a limited freedom of movement. The animal can enter the milking parlour from a longitudinal side near the rear end, while the animal can leave it again at the same longitudinal side near the front end. As the front end of the milking parlour is provided with a feeding arrangement, the cow will advance sufficiently far to the front and arrive in a position wherein it can be milked easily. At the other longitudinal side of the milking parlour than where the entrance and exit are located, there is mounted a fixedly arranged frame 3, which frame 3 constitutes part of the railing 2 and includes a first frame portion 4 and a second frame portion 5. The first frame portion 4 extends parallel to the second frame portion 5 and is located predominantly thereabove. In this situation, the first frame portion 4 is connected rigidly to the outer side of two vertical posts 6 and 7 which constitute part of the railing 2, whilst the second frame portion 5 is arranged fixedly between these two posts 6 and 7. A milking robot 8 for the automatic milking of animals is connected movably to the first frame portion 4, while this milking robot bears on the second frame portion 5 which further is disposed at such a height that arms of the milking robot 8 can move along the bottom side thereof to under the cow present in the milking parlour. The milking robot 8 includes a carrier frame 9 for the further portions of the milking robot. By implementing the upper frame portion 4 as a rail, the carrier frame 9, and consequently the entire milking robot 8, can easily be moved therealong. The frame portion 9 includes a beam 10 which extends predominantly parallel to the first frame portion 4, a beam 11 which extends perpendicularly to the latter beam in the vertical direction and is rigidly connected thereto and two struts 12. Near the ends of the beam 10 there are arranged pairs of supporting elements 13. Two rollers 16 forming a roller element pair 15 are connected at an angle of approximately 45° to each pair of supporting elements 13 by means of supporting plates 14 rigidly connected thereto, the arrangement being such that the carrier frame 9 is suspended under the upper frame portion 4 capably of easy movement therealong. On the beam 10 of the carrier frame there is arranged at either side thereof a carrier 17. On these carriers there is fitted capably of pivotal movement about a pivot shaft 18 a motor 19. This motor 19 drives a roller 20 which preferably has a rubber surface, the roller being pushed against the upper frame portion 4 by means of a spring member 21. Since the spring member 21 is operative between the motor 19 and the carrier frame 9, the roller 20 to be driven by the motor 19 is kept against the upper frame portion 4, so that, when the motor is driven, this roller is moved along the upper side of the upper frame portion 4, and consequently also the entire carrier frame 9. A sensor 22, which e.g. includes a laser, is connected to the supporting element 13 which, taken relative to the milking parlour, is the rearmost one. With the aid of this sensor 22 it is possible to direct the milking robot from a rest position into the longitudinal direction of the milking parlour to a start position, from which the arms of the milking robot are moved to under the animal present in the milking parlour, and to follow the movements of the animal in the longitudinal direction of the milking parlour. To that end, the sensor 22 co-operates with a supporting element 23 which is movable against the rear side of the animal. With the aid of a system of rods, which in the present design is constituted by a quadrangular construction, more specifically a parallelogram construction 24, this supporting element 23 is disposed on the milking parlour floor in such a manner that it is pivotal with respect thereto. Via two rods 25, the supporting element 23 is provided with a plate 26 which is arranged laterally beyond the frame portions 4 and 5 and is positioned such that it can reflect a signal transmitted by the sensor 22. After the reflected signal has been received by the sensor 22, this sensor supplies a control signal which is a measure of the actual, i.e. measured, distance between the plate 26 and the sensor 22; the motor 19 can be controlled by this control signal, whereby the milking robot 8 can be directed in such a manner in the longitudinal direction of the milking parlour that the distance between the plate 26 and the sensor 22 can be adjusted to, or maintained at, a preset value. When the milking robot 8 is in its rest position, it has been brought into a position which is farthest possible to the rear with respect to the frame portions 4 and 5, in which situation the milking robot 8 pushes via a contact element 27 against the plate 26 and thus pushes the supporting element 23 to and keeps it in a position which is farthest possible to the rear. In other words, the supporting element 23 is locked by the milking robot 8 when the latter is in the rest position. When the milking robot is directed from this rest position into the longitudinal direction of the milking parlour to the start position, from which the arms of the milking robot are moved to under the animal present in the milking parlour, then the supporting element 23 is unlocked and is pushed under spring pressure, by means of a spring disposed between the parallelogram construction 24 and the railing 2, against the rear side of the cow then present in the milking parlour. Even though the cow advances or retreats, the supporting element 23 will always remain pushed against the rear side of the animal under the action of the spring 28, so that the position of the plate 26 determines the position of the animal in the milking parlour in the longitudinal direction and so that, by means of the sensor 22, while keeping the distance in the longitudinal direction between the plate 26 and the sensor 22 constant, the milking robot can follow the movements of the cow in the longitudinal direction of the milking parlour. In the present design, the beam 11 of the carrier frame 9 extends downwardly in the vertical direction to just below the second frame portion 5. The bottom end of this beam 11 is provided with a horizontal rearwardly extending strip 29, onto which a freely rotatable roller element 30 is disposed. The lower frame portion 5 is constituted by a rail, more specifically by a rail in the form of a U-shaped beam, the freely rotatable roller element 30 being arranged so as to be movable between the two upright edges of the U-shaped beam. Thus, the milking robot 8 bears on the lower frame portion 5 and, when the milking robot 8 is moved along the first frame portion 4 by means of the motor, it can travel easily along the second frame portion 5. In addition to the carrier frame 9, the milking robot includes a robot arm construction 31 which is movable in a predominantly vertical direction relative to the carrier frame 9 by means of an operating cylinder 32. The robot arm construction 31 is connected movably to the carrier frame 9 by a quadrangular construction 33. In the embodiment shown, the upper arm 34 of this quadrangular construction 33 is of a fixed length, whereas the lower arm 35 thereof is adjustable in length, as a result of which the orientation of the robot arm construction 31 can be adjusted to a limited extent. The robot arm construction 31 comprises a predominantly vertical robot arm 36 as well as robot arms 37 which are capable of movement in a predominantly horizontal plane. The robot arm 36 is connected to the beam 11 of the carrier frame 9 via the quadrangular construction 33. The operating cylinder 32 is operative between the carrier frame 9 and the robot arm 36. Since the orientation of the robot arm 36 is adjustable to some extent by means of the lower arm 35 of the quadrangular construction 33, the position in which the operating cylinder 32 acts on the robot arm 36 is spatially not completely determined. For this reason, the housing of the operating cylinder 32 is arranged on a carrier plate 38 attached to the beam 10 of the carrier frame 9 so as to be pivotable to a limited extent. On this carrier plate 38 there are disposed supports 39, between which the housing of the operating cylinder 32 can move about a pivot shaft 40. In the present embodiment, the operating cylinder is designed as a servo-pneumatic positioning cylinder. This means that, connected to the lower end of the piston rod 41 via a plate 42 rigidly connected thereto, there is present a position feedback rod 43, by means of which in the portion 57 of the operating cylinder by a potentiometer there is derived a signal indicating the position of the piston rod relative to the cylinder housing, while by means of the signal supplied by this potentiometer the position of the piston rod relative to the cylinder housing can be adjusted to a preset position. The operating cylinder 32 is furthermore provided with an overload protection device, so that, as soon as the animal present in the milking parlour exercises force on the robot arm construction 31, e.g. by hitting it with one of its legs, the robot arm construction 31 can be moved to its lowest position. Figures 2 and 4 show the milking robot 8 in the rest position, in which it has been moved farthest possible to the rear relative to the frame portions 4 and 5, and in which the robot arm construction 31 is brought to the lowest possible position above the soil. When the cow is present in the milking parlour and the milking procedure is to be started, the milking robot 8 is moved from the rest position into the start position, i.e. into the position in which the arms of the milking robot 8 can be moved to under the cow.

In the present embodiment, for this purpose the milking robot is provided with arms 44, 45 and 46. The arms 44 and 45 are disposed at a fixed angle of 90° relative to each other. Consequently, the arms 44 and 45 are moved jointly, more particularly by an operating cylinder 47 which is disposed between a supporting plate 48 attached to the robot arm 36 and a connection member 49 provided between the two arms 44 and 45. The two arms 44 and 45 are pivotal about a predominantly vertical pivot shaft 50 arranged between the supporting plate 48 and a supporting plate 48A, which latter plate is also rigidly connected to the robot arm 36, more specifically to the lower end thereof. With respect to the arm 45, the arm 46 is pivotable about a predominantly vertical pivot shaft 51 by means of an operating cylinder 52, which is arranged between the arm 46 and the end of the arm 45 located near the connection member 49. Near the end of the arm 46 there are fitted the teat cups 53 and 54 which are connectable to the teats of the cow. Between the two teat cups 54 there is provided a slide which is movable on the arm 46 and carries a sensor 55 which can determine accurately the position of the teats by a sector-sequential scanning motion, whereby the operating cylinders 32, 47 and 52 can be controlled such by a computer that the teat cups can be connected properly to the teats. When the robot arms 44 to 46 have been moved to under the cow, these arms are located in a relatively low position wherein the teats will not yet be detected by the sensor 55. By means of the operating cylinder 32, the robot arms 44 to 46 are now moved upwardly in steps until the sensor 55 detects one or more teats of the animal. Should during this upward movement the robot arms 44 to 46 have arrived in such a high position that the upper end of the sensor 55 pushes against the cow's abdomen, then a switch 56 located at the upper side of sensor 55 causes the robot arms to move downwards again, whereafter, with the aid of the sensor 55, the determination of the position of the teats can be repeated, the robot arms being gradually moved upwards again in the process.

The invention is not limited to the embodiment described in the foregoing, but also relates to all the details in the drawings, whether they have been described or not, and to all modifications in the construction in so far as they are within the framework of the appended claims.

## Claims

1. An implement for milking animals, such as cows, comprising a milking parlour and a milking robot (8) for the automatic milking of animals, the implement being provided with a distance measuring sensor (22) for measuring the distance to the rear side of the animal, by means of which sensor the milking robot (8) can be directed from a rest position into the longitudinal direction of the milking parlour to a start position, from which arms (37) of the milking robot (8) are moved to under the animal present in the milking parlour, and the movements of the animal in the longitudinal direction of the milking parlour can be followed.

2. An implement as claimed in claim 1, **characterized in that** there is provided a supporting element (23) which is movable against the rear side of the animal and can co-operate with the distance measuring sensor (22), i.e. in such a manner that, when the animal moves in the longitudinal direction of the milking parlour, the supporting element (23) is moved along and consequently, while preserving a predetermined supporting element-to-sensor distance in the longitudinal direction, the milking robot (8).

3. An implement as claimed in claim 2, **characterized in that** the supporting element (23) includes a plate (26) which is disposed such that it laterally extends beyond the longitudinal side of the milking parlour, and that from the actual distance between the plate (26) and the distance measuring sensor (22) there is derived a control signal for the motor (19) to move the milking robot (8) into the longitudinal direction of the milking parlour, with the aid of which control signal the distance between the plate (26) and the distance measuring sensor (22) is readjusted to a preset value.

4. An implement as claimed in claim 2 or 3, **characterized in that** the supporting element (23) is disposed on the milking parlour floor in such a manner that it is pivotal with respect thereto via a rod system.

5. An implement as claimed in claim 4, **characterized in that** the rod system is constituted by a quadrangular construction, more specifically a parallelogram construction (24).

6. An implement as claimed in any one of claims 2 to 5, **characterized in that**, after having been unlocked, the supporting element (23) is pushed under spring pressure against the rear side of the animal present in the milking parlour.

7. An implement as claimed in claim 6, **characterized in that** the supporting element (23) is locked by the milking robot (8) when the latter is in the rest position.

8. An implement as claimed in claim 7, **characterized in that** a contact element (27) is provided, via which the milking robot (8) pushes the supporting element (23) and keeps it in a position which is farthest possible to the rear.

9. An implement as claimed in claim 6, 7 or 8, **characterized in that** the supporting element (23) is unlocked when the milking robot (8) is directed from the rest position into the longitudinal direction of the milking parlour to the start position, from which the arms (37) of the milking robot (8) are moved to under the animal present in the milking parlour.

10. An implement as claimed in any one of the preceding claims, **characterized in that** the milking robot (8) is movable along two guide elements (4, 5), parallel to each other in the longitudinal direction of the milking parlour.

## Patentansprüche

1. Vorrichtung zum Melken von Tieren, wie z. B. Kühen, mit einem Melkstand und einem Melkroboter (8) zum automatischen Melken von Tieren, wobei die Vorrichtung mit einem Entfernungssensor (22) zum Messen der Entfernung zur Rückseite des Tieres versehen ist, wobei der Melkroboter (8) mittels des Sensors aus einer Ruhelage in Längsrichtung des Melkstandes in eine Arbeitslage gebracht werden kann, in der Arme (37) des Melkroboters (8) unter das im Melkstand befindliche Tier bewegt werden und den Bewegungen des Tieres in Längsrichtung des Melkstandes gefolgt werden kann.

2. Vorrichtung nach Anspruch 1,
**dadurch gekennzeichnet, daß** ein Stützelement (23) vorhanden ist, das gegen die Rückseite des Tieres bewegbar ist und mit dem Entfernungssensor (22) zusammenwirken kann, derart, daß beim Bewegen des Tieres in Längsrichtung des Melkstandes das Stützelement (23) und demzufolge der Melkroboter (8) mitbewegt werden, wobei ein vorgegebener Abstand zwischen Stützelement und Sensor in Längsrichtung beibehalten wird.

3. Vorrichtung nach Anspruch 2,
**dadurch gekennzeichnet, daß** das Stützelement (23) eine Platte (26) enthält, die derart angeordnet ist, daß sie seitlich über die Längsseite des Melkstandes hinausragt, und daß von dem tatsächlichen Abstand zwischen der Platte (26) und dem Entfernungssensor (22) ein Steuersignal für den Motor (19) abgeleitet wird, um den Melkroboter (8) in Längsrichtung des Melkstandes zu bewegen, wobei mit Hilfe des Steuersignals der Abstand zwischen der Platte (26) und dem Entfernungssensor (22) wieder auf einen vorgegebenen Wert eingestellt wird.

4. Vorrichtung nach Anspruch 2 oder 3,
**dadurch gekennzeichnet, daß** das Stützelement (23) auf dem Melkstandboden derart angeordnet ist, daß es relativ zu diesem über ein Gestänge schwenkbar ist.

5. Vorrichtung nach Anspruch 4,
**dadurch gekennzeichnet, daß** das Gestänge durch eine Viergelenk-Konstruktion, insbesondere eine Parallelogramm-Konstruktion (24) gebildet ist.

6. Vorrichtung nach einem der Ansprüche 2 bis 5,
**dadurch gekennzeichnet, daß** das Stützelement (23) nach seiner Entriegelung unter Federdruck gegen die Rückseite des im Melkstand befindlichen Tieres gedrückt wird.

7. Vorrichtung nach Anspruch 6,
**dadurch gekennzeichnet, daß** das Stützelement (23) durch den Melkroboter (8) verriegelt ist, wenn sich dieser in der Ruhelage befindet.

8. Vorrichtung nach Anspruch 7,
**dadurch gekennzeichnet, daß** ein Kontaktelement (27) vorgesehen ist, über welches der Melkroboter (8) gegen das Stützelement (23) drückt und es in einer Position hält, die so weit hinten wie möglich liegt.

9. Vorrichtung nach Anspruch 6, 7 oder 8,
**dadurch gekennzeichnet, daß** das Stützelement (23) entriegelt wird, wenn der Melkroboter (8) aus der Ruhelage in Längsrichtung des Melkstandes in die Arbeitslage gebracht wird, in der die Arme (37) des Melkroboters (8) unter das im Melkstand befindliche Tier bewegt werden.

10. Vorrichtung nach einem der vorhergehenden Ansprüche,
**dadurch gekennzeichnet, daß** der Melkroboter (8) entlang zweier Führungselemente (4, 5) bewegbar ist, die sich parallel zueinander in Längsrichtung des Melkstandes erstrecken.

## Revendications

1. Dispositif de traite d'animaux, comme des vaches, comprenant une stalle de traite et un robot trayeur (8) pour la traite automatique d'animaux, le dispositif étant doté d'un capteur de mesure de distance (22) pour mesurer la distance jusqu'à la partie postérieure de la vache, capteur par le biais duquel le robot trayeur (8) peut être dirigé depuis une position de repos dans le sens longitudinal de la stalle de traite vers une position de démarrage, depuis laquelle des bras (37) du robot trayeur (8) sont mus jusque sous la vache présente dans la stalle de traite, et les mouvements de la vache dans le sens longitudinal de la stalle de traite peuvent être accompagnés.

2. Dispositif selon la revendication 1, **caractérisé en ce qu'**un élément de support (23) est positionné pour être mobile par rapport à la partie postérieure de la vache et qu'il peut fonctionner conjointement avec le capteur de mesure de distance (22), c'est-à-dire d'une manière telle que, lorsque la vache se meut dans le sens longitudinal de la stalle de traite, l'élément de support (23) est également mu et, par voie de conséquence, le robot trayeur (8), tout en préservant une distance prédéterminée de support d'élément à capteur dans le sens longitudinal.

3. Dispositif selon la revendication 2, **caractérisé en ce que** l'élément de support (23) comprend une plaque (26) qui est positionnée de manière à s'étendre latéralement au-delà du côté longitudinal de la stalle de traite, et **en ce que** depuis la distance réelle comprise entre la plaque (26) et le capteur de mesure de distance (22), un signal de commande est dérivé pour que le moteur (19) meuve le robot trayeur (8) dans le sens longitudinal de la stalle de traite, signal de commande à l'aide duquel la distance comprise entre la plaque (26) et le capteur de mesure de distance (22) est réajustée sur une valeur prédéfinie.

4. Dispositif selon la revendication 2 ou 3, **caractérisé en ce que** l'élément de support (23) est positionné sur le sol de la stalle de traite d'une manière telle qu'il pivote par rapport à celui-ci via un système de tiges.

5. Dispositif selon la revendication 4, **caractérisé en ce que** le système de tiges est constitué d'un dispositif quadrangulaire, plus spécifiquement d'un dispositif en parallélogramme (24).

6. Dispositif selon l'une quelconque des revendications 2 à 5, **caractérisé en ce que**, après avoir été déverrouillé, l'élément de support (23) est poussé sous la pression du ressort contre la partie postérieure de la vache présente dans la stalle de traite.

7. Dispositif selon la revendication 6, **caractérisé en ce que** l'élément de support (23) est verrouillé par le robot trayeur (8) lorsque ce dernier est en position de repos.

8. Dispositif selon la revendication 7, **caractérisé en ce qu'**un élément de contact (27) est positionné, via lequel le robot trayeur (8) pousse l'élément de support (23) et le maintient dans une position qui est la plus loin possible de l'arrière.

9. Dispositif selon l'une quelconque des revendications 6, 7 ou 8, **caractérisé en ce que** l'élément de support (23) est déverrouillé lorsque le robot trayeur (8) est dirigé depuis la position de repos dans le sens longitudinal de la stalle de traite vers la position de démarrage, à partir de laquelle les bras (37) du robot trayeur (8) sont mus jusque sous la vache présente dans la stalle de traite.

10. Dispositif selon l'une quelconque des revendications précédentes, **caractérisé en ce que** le robot trayeur (8) est mobile le long de deux éléments de guidage (4, 5), parallèles l'un à l'autre dans le sens longitudinal de la stalle de traite.
